# EUROPEAN PATENT SPECIFICATION

(11) **EP 2 857 944 B1**
(45) Date of publication and mention of the grant of the patent: **14.03.2018**
(21) Application number: 13794751.1
(22) Date of filing: 20.03.2013
(51) Int. Cl.: G06F 3/048, G06F 3/01, G06F 3/041, G06F 3/0488, G06F 3/0483, G06K 9/00

(54) **MOBILE COMMUNICATION TERMINAL, SCREEN ADJUSTING METHOD AND STORAGE MEDIUM**
MOBILES KOMMUNIKATIONSENDGERÄT, BILDSCHIRMEINSTELLVERFAHREN UND SPEICHERMEDIUM
TERMINAL DE COMMUNICATION MOBILE, PROCÉDÉ D'AJUSTEMENT D'ÉCRAN ET SUPPORT DE STOCKAGE

(30) Priority: 24.05.2012 CN 201210167296
(43) Date of publication of application: 08.04.2015
(73) Proprietor: Huizhou TCL Mobile Communication Co., Ltd., Huizhou, Guangdong 516006 (CN)
(72) Inventor: XIE, Fang, Huizhou Guangdong 516006 (CN)
(74) Representative: Brachmann, Roland W.
(86) International application number: PCT/CN2013/072932
(87) International publication number: WO 2013/174174

(56) References cited:
- EP-A1- 1 892 611
- EP-A2- 1 736 856
- EP-A2- 2 228 750
- CN-A- 102 104 672
- CN-A- 102 104 672
- CN-A- 102 117 165
- CN-A- 102 736 854
- US-A1- 2011 045 812
- US-A1- 2011 102 351
- US-A1- 2011 221 667
- US-A1- 2011 273 267

## Description

The present invention relates to the field of mobile communication technologies, and in particular, to a mobile communication terminal and a screen adjusting method. With the development of electronic technologies and the reduction of the manufacturing costs of various display screens, the display screens of more and more mobile communication terminals are increasingly larger. The mobile communication terminal of the prior art realizes switching between a horizontal screen and a vertical screen through a gravity sensor for the mobile communication terminal. The gravity sensor adjusts a display interface by detecting the direction of the earth gravity. For example, when a user reads an e-book through the mobile communication terminal, the gravity sensor built in the mobile communication terminal may detect the rotation of the mobile communication terminal so as to switch the vertical screen mode displayed for the e-book, making it convenient for the user to view. However, in certain circumstances, the user does not need such a display effect. For example, when the user lies on one side, the mobile communication terminal may automatically switch to a horizontal screen, which is contrary to the viewing habit of the user. However, the user cannot freely switch between the horizontal and vertical screen display modes of the mobile communication terminal, thus causing inconvenience to the user.

Therefore, a mobile communication terminal and a screen adjusting method are needed so as to solve the foregoing problems. A technical problem to be mainly solved by the present invention is to provide a mobile communication terminal and a screen adjusting method based on the mobile communication terminal so as to be convenient for a user to freely switch between horizontal and vertical screen display modes of the mobile communication terminal. This problem is solved according to the features of the independent claim(s). Further embodiments result from the depending claims.

In order to solve the foregoing technical problems, the present invention adopts a technical solution as follows: providing a screen adjusting method, wherein the mobile communication terminal is provided with a touch screen, and the method comprises the following steps of: in a first screen display mode, responding to a selection of a user to provide a user interface of initial setting, detecting a first pressing action of a finger of the user on the user interface, collecting a first fingerprint image according to the first pressing action, and generating corresponding first fingerprint characteristic data according to the first fingerprint image, wherein the first fingerprint characteristic data comprises first fingerprint information and a first fingerprint direction; providing an application interface, detecting a second pressing action of a finger of the user on the user interface, collecting a second fingerprint image according to the second pressing action, and generating corresponding second fingerprint characteristic data according to the second fingerprint image, wherein the second fingerprint characteristic data comprises second fingerprint information and a second fingerprint direction; when it is determined that the first fingerprint information is consistent with the second fingerprint information, further calculating an angle difference value between the first fingerprint direction and the second fingerprint direction, and when the angle difference value is within a threshold range, switching to a second screen display mode, wherein the threshold range is between 85 degrees and 95 degrees or between -95 degrees and -85 degrees.

In an embodiment, the first screen display mode is a vertical screen display mode, and the second screen display mode is a horizontal screen display mode.

In an embodiment, the first screen display mode is a horizontal screen display mode, and the second screen display mode is a vertical screen display mode.

In order to solve the foregoing technical problems, the present invention adopts a technical solution as follows: providing a screen adjusting method, wherein the mobile communication terminal is provided with a touch screen, and the method comprises the following steps of: in a first screen display mode, responding to a selection of a user to provide a user interface of initial setting, detecting a first pressing action of a finger of the user on the user interface, collecting a first fingerprint image according to the first pressing action, and generating corresponding first fingerprint characteristic data according to the first fingerprint image, wherein the first fingerprint characteristic data comprises first fingerprint information and a first fingerprint direction; providing an application interface, detecting a second pressing action of a finger of the user on the user interface, collecting a second fingerprint image according to the second pressing action, and generating corresponding second fingerprint characteristic data according to the second fingerprint image, wherein the second fingerprint characteristic data comprises second fingerprint information and a second fingerprint direction; when it is determined that first fingerprint information is consistent with second fingerprint information, calculating an angle difference value between a first fingerprint direction and a second fingerprint direction, and when the angle difference value is within a threshold range, switching to a second screen display mode.

In an embodiment, the first screen display mode is a vertical screen display mode, and the second screen display mode is a horizontal screen display mode.

In an embodiment, the threshold range is between 80 degrees and 100 degrees or between -100 degrees and -80 degrees.

In an embodiment, the first screen display mode is a horizontal screen display mode, and the second screen display mode is a vertical screen display mode.

In an embodiment, the threshold range is between 80 degrees and 100 degrees or between -100 degrees and -80 degrees.

In order to solve the foregoing technical problems, the present invention adopts another technical solution as follows. providing a mobile communication terminal, comprising: a touch screen, a processing module and a switching module; when the touch screen is in a first screen display mode, the touch screen responds to a selection of a user to provide a user interface of initial setting, and the processing module detects a first pressing action of a finger of the user on the user interface, collects a first fingerprint image according to the first pressing action, and generates corresponding first fingerprint characteristic data according to the first fingerprint image, wherein the first fingerprint characteristic data comprises first fingerprint information and a first fingerprint direction; the touch screen provides an application interface, and the processing module detects a second pressing action of a finger of the user on the user interface, collects a second fingerprint image according to the second pressing action, and generates corresponding second fingerprint characteristic data according to the second fingerprint image, wherein the second fingerprint characteristic data comprises second fingerprint information and a second fingerprint direction; when the first fingerprint information is determined to be consistent with the second fingerprint information by the processing module, the processing module further calculates an angle difference value between a first fingerprint direction and a second fingerprint direction, and when the angle difference value is within a threshold range, the switching module controls the touch screen to switch to a second screen display mode.

In an embodiment, the first screen display mode is a vertical screen display mode, and the second screen display mode is a horizontal screen display mode.

In an embodiment, the threshold range is between 80 degrees and 100 degrees or between -100 degrees and -80 degrees.

In an embodiment, the first screen display mode is a horizontal screen display mode, and the second screen display mode is a vertical screen display mode.

In an embodiment, the threshold range is between 80 degrees and 100 degrees or between -100 degrees and -80 degrees.

In order to solve the foregoing technical problems, the present invention adopts another technical solution as follows: a storage medium internally stored with a processor executable instruction, wherein the processor executable instruction is used to make the process finish the following operations:
- in a first screen display mode, responding to a selection of a user to provide a user interface of initial setting, detecting a first pressing action of a finger of the user on the user interface, collecting a first fingerprint image according to the first pressing action, and generating corresponding first fingerprint characteristic data according to the first fingerprint image, wherein the first fingerprint characteristic data comprises first fingerprint information and a first fingerprint direction;
- providing an application interface, detecting a second pressing action of a finger of the user on the user interface, collecting a second fingerprint image according to the second pressing action, and generating corresponding second fingerprint characteristic data according to the second fingerprint image, wherein the second fingerprint characteristic data comprises second fingerprint information and a second fingerprint direction;
- when it is determined that the first fingerprint information is consistent with the second fingerprint information, further calculating an angle difference value between the first fingerprint direction and the second fingerprint direction, and when the angle difference value is within a threshold range, switching to a second screen display mode.

In an embodiment, the first screen display mode is a vertical screen display mode, and the second screen display mode is a horizontal screen display mode.

In an embodiment, the threshold range is between 80 degrees and 100 degrees or between -100 degrees and -80 degrees.

In an embodiment, the first screen display mode is a horizontal screen display mode, and the second screen display mode is a vertical screen display mode.

In an embodiment, the threshold range is between 80 degrees and 100 degrees or between -100 degrees and -80 degrees.

The present invention has the advantageous effects that: distinguished from the situations of the prior art, the mobile communication terminal and the screen adjusting method based on the mobile communication terminal of the present invention acquire the first fingerprint characteristic data and the second fingerprint characteristic data, when it is determined that the first fingerprint information is consistent with the second fingerprint information, and the angle difference value is within the threshold range, switch to a second screen display mode, so that the user can freely switch between the horizontal and vertical screen display modes of the mobile communication terminal, thus improving the experience effect of the user. Document EP1892611 discloses a screen adjusting method for a touch screen comprising the steps of: in a first screen display mode, responding to a selection of a user to provide a user interface of initial setting; detecting a first pressing action of a finger of the user on a user interface; detecting a second pressing action of a finger of the user on the user interface; when it is determined that the first fingerprint information matches the second fingerprint information further calculating an angle difference value and when said difference is within a certain relationship with a predetermined threshold, switching to a second screen display mode. The present invention will be carried out according to the attached independent claims. The aforementioned characteristics, features and advantages of the invention as well as the way they are achieved will be further illustrated in connection with the following examples and considerations as discussed in view of the figures.
- FIG. 1: is a structural schematic diagram of a first embodiment of a mobile communication terminal according to the present invention;
- FIG.2: is a structural schematic diagram of a processing module in Fig.1; and
- FIG.3: is a flow chart of a screen adjusting method based on the mobile communication terminal according to the present invention.

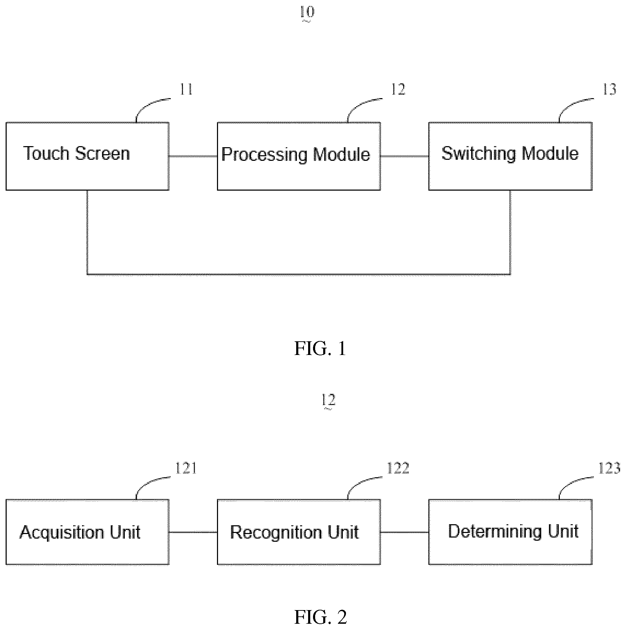

FIG.1 is a structural schematic diagram of a first embodiment of a mobile communication terminal according to the present invention. As shown in FIG.1, the mobile communication terminal 10 disclosed by the embodiment comprises: a touch screen 11, a processing module 12 and a switching module 13.

In the embodiment, when the touch screen 11 is in a first screen display mode, the touch screen 11 responds to a selection of a user to provide a user interface of initial setting. At this time, the processing module 12 detects a first pressing action of a finger of the user on the user interface from the touch screen 11, collects a first fingerprint image of a finger of the user on the touch screen 11 according to the first pressing action, and generates corresponding first fingerprint characteristic data according to the first fingerprint image, wherein the first fingerprint characteristic data comprises first fingerprint information and a first fingerprint direction.

When the touch screen 11 provides an application interface, the user carries out a second pressing action on the user interface. At this time, the processing module 12 detects the second pressing action of a finger of the user on the user interface from the touch screen 11, collects a second fingerprint image of a finger of the user on the touch screen 11 according to the second pressing action, and generates corresponding second fingerprint characteristic data according to the second fingerprint image, wherein the second fingerprint characteristic data comprises second fingerprint information and a second fingerprint direction;

The processing module 12 compares the first fingerprint information with the second fingerprint information. When the first fingerprint information is determined to be consistent with the second fingerprint information, the processing module 12 further calculates an angle difference value θ between the first fingerprint direction and the second fingerprint direction, and when the angle difference value θ is within a threshold range, the switching module 13 controls the touch screen 11 to switch to a second screen display mode.

Please refer to FIG.2 again. FIG.2 is a structural schematic diagram of a processing module in FIG.1. As shown in FIG. 12, the processing module 12 of the embodiment comprises: an acquisition unit 121, a recognition unit 122 and a determining unit 123.

The acquisition unit 121 is connected with the touch screen 11 so as to induce and acquire the first pressing action or the second pressing action of the user on the touch screen 11 from the touch screen 11, and send information of the first pressing action or the second pressing action to the recognition unit 122. The recognition unit 122 collects the first fingerprint image or the second fingerprint image according to the first pressing action or the second pressing action, and generates corresponding first fingerprint characteristic data or second fingerprint characteristic data according to the first fingerprint image or the second fingerprint image. The determining unit 123 acquires and determines the first fingerprint characteristic data and the second fingerprint characteristic data from the recognition unit 122. When the first fingerprint information is consistent with the second fingerprint characteristic data, and when the angle difference value θ is within a threshold range, the determining unit 123 sends a signal to the switching module 13, so that the switching module 13 controls the touch screen 11 to switch to a second screen display mode.

The principle for the mobile communication terminal 10 disclosed by the embodiment to adjust the screen will be described in details hereinafter.

When the touch screen 11 is in a first screen display mode, a user touches the touch screen 11 to select initial setting. The touch screen 11 displays a user interface and a finger of the user carries out a first pressing action on the user interface. The acquisition unit 121 acquires the first pressing action through the touch screen 11, and sends information of the first pressing action to the recognition unit 122. The recognition unit 122 collects a first fingerprint image according to the first pressing action, and generates corresponding first fingerprint characteristic data according to the first fingerprint image. The user associates the first fingerprint characteristic data with the first screen display mode through the mobile communication terminal 10, and saves the first fingerprint characteristic data on the determining unit 123 of the mobile communication terminal 10.

When the touch screen 11 displays an application interface, the user carries out a second pressing action on the user interface. The acquisition unit 121 acquires the second pressing action through the touch screen 11, and sends information of the second pressing action to the recognition unit 122. The recognition unit 122 collects a second fingerprint image according to the second pressing action, and generates corresponding second fingerprint characteristic data according to the second fingerprint image. The determining unit 123 compares the first fingerprint characteristic data with the second fingerprint characteristic data. When the first fingerprint information is determined to be consistent with the second fingerprint information, the determining unit 123 further determines whether an angle difference value θ between the first fingerprint direction and the second fingerprint direction is within a threshold range. When the angle difference value θ is within the threshold range, the switching module 13 controls the touch screen 11 to switch to a second screen display mode. In a preferred embodiment, the first screen display mode is a vertical screen display mode and the second screen display mode is a horizontal screen display mode; moreover, the threshold range is between 80 degrees and 100 degrees or between -100 degrees and -80 degrees.

It should be noted that those skilled in the art may completely adjust the first screen display mode into the horizontal screen display mode and adjust the second screen display mode into the vertical screen display mode. In addition, in other embodiments, those skilled in the art may further set the threshold range into other values, for example, the threshold range may be set between 85 degrees and 95 degrees or between -95 degrees and -85 degrees.

Distinguished from the mobile communication terminal of the prior art, the mobile communication terminal 10 of the embodiment acquires the first fingerprint characteristic data and the second fingerprint characteristic data from the touch screen 11 through the processing module 12, when it is determined that the first fingerprint information is consistent with the second fingerprint information, and the angle difference value is within the threshold range, the switching module 13 controls the touch screen 11 to switch to a second screen display mode, so that the user can freely switch between the horizontal and vertical screen display modes of the mobile communication terminal 10, thus improving the experience effect of the user.

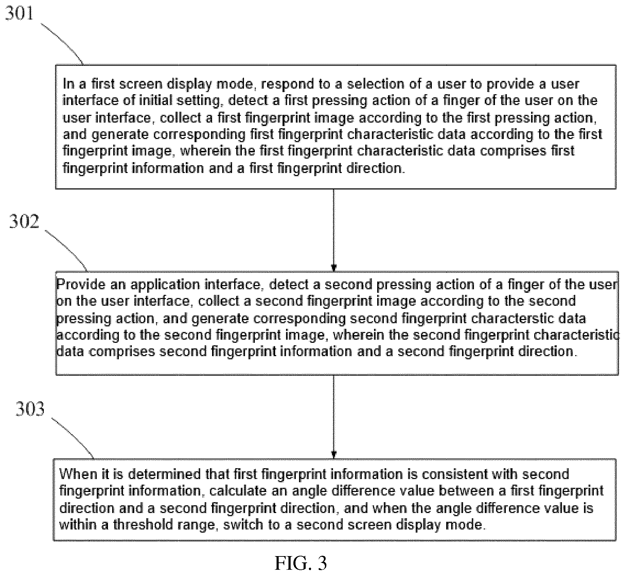

Please refer to FIG.3. FIG.3 is a flow chart of a screen adjusting method based on the mobile communication terminal according to the present invention. As shown in FIG.3, THE screen adjusting method based on the mobile communication terminal disclosed by the embodiment comprises the following steps.

Step 301: In a first screen display mode, respond to a selection of a user to provide a user interface of initial setting, detect a first pressing action of a finger of the user on the user interface, collect a first fingerprint image according to the first pressing action, and generate corresponding first fingerprint characteristic data according to the first fingerprint image, wherein the first fingerprint characteristic data comprises first fingerprint information and a first fingerprint direction.

Step 302: Provide an application interface, detect a second pressing action of a finger of the user on the user interface, collect a second fingerprint image according to the second pressing action, and generate corresponding second fingerprint characteristic data according to the second fingerprint image, wherein the second fingerprint characteristic data comprises second fingerprint information and a second fingerprint direction.

Step 303: When it is determined that first fingerprint information is consistent with second fingerprint information, calculate an angle difference value between a first fingerprint direction and a second fingerprint direction, and when the angle difference value is within a threshold range, switch to a second screen display mode.

The details of related art of the foregoing steps may refer to the detailed descriptions above, and will not be repeatedly described any longer.

It should be noted that the mobile communication terminal of the present invention may specifically be such terminal equipment as a mobile phone, a palm computer, a tablet computer and the like.

To sum up, the mobile communication terminal and the screen adjusting method based on the mobile communication terminal of the present invention acquire the first fingerprint characteristic data and the second fingerprint characteristic data, when it is determined that the first fingerprint information is consistent with the second fingerprint information, and the angle difference value is within the threshold range, switch to a second screen display mode, so that the user can freely switch between the horizontal and vertical screen display modes of the mobile communication terminal, thus improving the experience effect of the user.

The present invention further provides a storage medium, wherein the storage medium is stored with applications of the screen adjusting method based on the mobile communication terminal of the foregoing embodiments.

## Claims

1. A screen adjusting method, (301, 302, 303) wherein a mobile communication terminal (10) is provided with a touch screen (11), and the method comprises the following steps of:
- in a first screen display mode, responding (301) to a selection of a user to provide a user interface having an initial setting, detecting (301) a first pressing action of a finger of the user on the user interface, collecting a first fingerprint image according to the first pressing action, and generating corresponding first fingerprint characteristic data according to the first fingerprint image, wherein the first fingerprint characteristic data comprises first fingerprint information and a first fingerprint direction;
- providing an application interface, detecting (302) a second pressing action of a finger of the user on the user interface, collecting a second fingerprint image according to the second pressing action, and generating corresponding second fingerprint characteristic data according to the second fingerprint image, wherein the second fingerprint characteristic data comprises second fingerprint information and a second fingerprint direction;
- when it is determined that first fingerprint information is consistent with second fingerprint information, calculating (303) an angle difference value between a first fingerprint direction and a second fingerprint direction, and when the angle difference value is within a threshold range, switching to a second screen display mode.

2. The method according to claim 1, wherein the first screen display mode is a vertical screen display mode, and the second screen display mode is a horizontal screen display mode.

3. The method according to claim 1, wherein the first screen display mode is a horizontal screen display mode, and the second screen display mode is a vertical screen display mode.

4. The method according to any of the preceding claims, wherein the threshold range is between 80 degrees and 100 degrees or between -100 degrees and -80 degrees.

5. The method according to any of claims 1 to 3, wherein the threshold range is between 85 degrees and 95 degrees or between -95 degrees and -85 degrees.

6. A mobile communication terminal (10) comprising: a touch screen (11), a processing module (12) and a switching module; the mobile communication terminal (10) being adapted to perform each of the following method steps:
- when the touch screen is in a first screen display mode, the touch screen responds to a selection of a user to provide a user interface of initial setting, and the processing module detects a first pressing action of a finger of the user on the user interface, collects a first fingerprint image according to the first pressing action, and generates corresponding first fingerprint characteristic data according to the first fingerprint image, wherein the first fingerprint characteristic data comprises first fingerprint information and a first fingerprint direction;
- the touch screen provides an application interface, and the processing module detects a second pressing action of a finger of the user on the user interface, collects a second fingerprint image according to the second pressing action, and generates corresponding second fingerprint characteristic data according to the second fingerprint image, wherein the second fingerprint characteristic data comprises second fingerprint information and a second fingerprint direction;
- when the first fingerprint information is determined to be consistent with the second fingerprint information by the processing module, the processing module further calculates an angle difference value between the first fingerprint direction and the second fingerprint direction, and when the angle difference value is within a threshold range, the switching module controls the touch screen to switch to a second screen display mode.

7. The mobile communication terminal according to claim 6, wherein the first screen display mode is a vertical screen display mode, and the second screen display mode is a horizontal screen display mode.

8. The mobile communication terminal according to claim 6, wherein the first screen display mode is a horizontal screen display mode, and the second screen display mode is a vertical screen display mode.

9. The mobile communication terminal according to any of claims 6 to 8, wherein the threshold range is between 80 degrees and 100 degrees or between -100 degrees and -80 degrees.

10. A storage medium having stored thereon processor executable instructions wherein when said instructions are executed by a processor to carry out each of the following operations:
- in a first screen display modes, providing a user interface of initial setting according to an user selection, user interface of initial setting according to an user selection, detecting a first pressing action of a finger of the user on the user interface on a touch screen, collecting a first fingerprint image according to the first pressing action, and generating corresponding first fingerprint characteristic data according to the first fingerprint image, wherein the first fingerprint characteristic data comprises first fingerprint information and a first fingerprint direction;
- providing an application interface, detecting a second pressing action of a finger of the user on the user interface on the touch screen, collecting a second fingerprint image according to the second pressing action, and generating corresponding second fingerprint characteristic data according to the second fingerprint image, wherein the second fingerprint characteristic data comprises second fingerprint information and a second fingerprint direction;
- when it is determined that the first fingerprint information is consistent with the second fingerprint information, further calculating an angle difference value between the first fingerprint direction and the second fingerprint direction, and when the angle difference value is within a threshold range, switching to a second screen display mode.

11. The storage medium according to claim 10, wherein the first screen display mode is a vertical screen display mode, and the second screen display mode is a horizontal screen display mode.

12. The storage medium according to claim 10, wherein the first screen display mode is a horizontal screen display mode, and the second screen display mode is a vertical screen display mode.

13. The storage medium according to any of claims 10 to 12, wherein the threshold range is between 80 degrees and 100 degrees or between -100 degrees and -80 degrees.

## Patentansprüche

1. Bildschirmeinstellverfahren (301, 302, 303), wobei ein mobiles Kommunikationsendgerät (10) mit einem Touchscreen (11) versehen ist, und das Verfahren die folgenden Schritte umfasst:
- in einem ersten Bildschirmanzeigemodus, Ansprechen (301) auf eine Auswahl eines Benutzers zum Bereitstellen einer Benutzerschnittstelle, die eine Anfangseinstellung aufweist, Detektieren (301) eines ersten Drückvorgangs mittels eines Fingers des Benutzers auf der Benutzerschnittstelle, Erfassen eines ersten Fingerabdruckbilds gemäß dem ersten Drückvorgang und Erzeugen von entsprechenden ersten Fingerabdruckcharakteristik-Daten gemäß dem ersten Fingerabdruckbild, wobei die ersten Fingerabdruckcharakteristik-Daten erste Fingerabdruckinformationen und eine erste Fingerabdruckrichtung umfassen;
- Bereitstellen einer Anwendungsschnittstelle, Detektieren (302) eines zweiten Drückvorgangs mittels eines Fingers des Benutzers auf der Benutzerschnittstelle, Erfassen eines zweiten Fingerabdruckbilds gemäß dem zweiten Drückvorgang und Erzeugen von entsprechenden zweiten Fingerabdruckcharakteristik-Daten gemäß dem zweiten Fingerabdruckbild, wobei die zweiten Fingerabdruckcharakteristik-Daten zweite Fingerabdruckinformationen und eine zweite Fingerabdruckrichtung umfassen;
- wenn bestimmt wird, dass erste Fingerabdruckinformationen mit zweiten Fingerabdruckinformationen konsistent sind, Berechnen (303) eines Winkeldifferenzwerts zwischen einer ersten Fingerabdruckrichtung und einer zweiten Fingerabdruckrichtung, und wenn der Winkeldifferenzwert innerhalb eines Schwellwertbereichs liegt, Schalten zu einem zweiten Bildschirmanzeigemodus.

2. Verfahren nach Anspruch 1, wobei der erste Bildschirmanzeigemodus ein Vertikal-Bildschirmanzeige-Modus ist und der zweite Bildschirmanzeigemodus ein Horizontal-Bildschirmanzeige-Modus ist.

3. Verfahren nach Anspruch 1, wobei der erste Bildschirmanzeigemodus ein Horizontal-Bildschirmanzeige-Modus ist und der zweite Bildschirmanzeigemodus ein Vertikal-Bildschirmanzeige-Modus ist.

4. Verfahren nach einem der vorhergehenden Ansprüche, wobei der Schwellwertbereich zwischen 80 Grad und 100 Grad oder zwischen -100 Grad und -80 Grad liegt.

5. Verfahren nach einem der Ansprüche 1 bis 3, wobei der Schwellwertbereich zwischen 85 Grad und 95 Grad oder zwischen -95 Grad und -85 Grad liegt.

6. Mobiles Kommunikationsendgerät (10), das umfasst:
einen Touchscreen (11), ein Verarbeitungsmodul (12) und ein Schaltmodul; wobei das mobile Kommunikationsendgerät (10) so ausgelegt ist, dass es jeden der folgenden Verfahrensschritte durchführt:
- wenn sich der Touchscreen in einem ersten Bildschirmanzeigemodus befindet, spricht der Touchscreen auf eine Auswahl eines Benutzers zum Bereitstellen einer Benutzerschnittstelle mit einer Anfangseinstellung an und detektiert das Verarbeitungsmodul einen ersten Drückvorgang mittels eines Fingers des Benutzers auf der Benutzerschnittstelle, erfasst ein erstes Fingerabdruckbild gemäß dem ersten Drückvorgang und erzeugt entsprechende erste Fingerabdruckcharakteristik-Daten gemäß dem ersten Fingerabdruckbild, wobei die ersten Fingerabdruckcharakteristik-Daten erste Fingerabdruckinformationen und eine erste Fingerabdruckrichtung umfassen;
- der Touchscreen stellt eine Anwendungsschnittstelle bereit und das Verarbeitungsmodul detektiert einen zweiten Drückvorgang mittels eines Fingers des Benutzers auf der Benutzerschnittstelle, erfasst ein zweites Fingerabdruckbild gemäß dem zweiten Drückvorgang und erzeugt entsprechende zweite Fingerabdruckcharakteristik-Daten gemäß dem zweiten Fingerabdruckbild, wobei die zweiten Fingerabdruckcharakteristik-Daten zweite Fingerabdruckinformationen und eine zweite Fingerabdruckrichtung umfassen;
- wenn von dem Verarbeitungsmodul bestimmt wird, dass die ersten Fingerabdruckinformationen mit den zweiten Fingerabdruckinformationen konsistent sind, berechnet das Verarbeitungsmodul ferner einen Winkeldifferenzwert zwischen der ersten Fingerabdruckrichtung und der zweiten Fingerabdruckrichtung, und wenn der Winkeldifferenzwert innerhalb eines Schwellwertbereichs liegt, steuert das Schaltmodul den Touchscreen so, dass er zu einem zweiten Bildschirmanzeigemodus schaltet.

7. Mobiles Kommunikationsendgerät nach Anspruch 6, wobei der erste Bildschirmanzeigemodus ein Vertikal-Bildschirmanzeige-Modus ist und der zweite Bildschirmanzeigemodus ein Horizontal-Bildschirmanzeige-Modus ist.

8. Mobiles Kommunikationsendgerät nach Anspruch 6, wobei der erste Bildschirmanzeigemodus ein Horizontal-Bildschirmanzeige-Modus ist und der zweite Bildschirmanzeigemodus ein Vertikal-Bildschirmanzeige-Modus ist.

9. Mobiles Kommunikationsendgerät nach einem der Ansprüche 6 bis 8, wobei der Schwellwertbereich zwischen 80 Grad und 100 Grad oder zwischen -100 Grad und -80 Grad liegt.

10. Speichermedium, auf dem von einem Prozessor ausführbare Anweisungen gespeichert sind, wobei dann, wenn die Anweisungen von einem Prozessor ausgeführt werden, jede der folgenden Operationen durchgeführt wird:
- in einem ersten Bildschirmanzeigemodus, Bereitstellen einer Benutzerschnittstelle mit einer Anfangseinstellung gemäß einer Benutzerauswahl, Detektieren eines ersten Drückvorgangs mittels eines Fingers des Benutzers auf der Benutzerschnittstelle auf einem Touchscreen, Erfassen eines ersten Fingerabdruckbilds gemäß dem ersten Drückvorgang und Erzeugen von entsprechenden ersten Fingerabdruckcharakteristik-Daten gemäß dem ersten Fingerabdruckbild, wobei die ersten Fingerabdruckcharakteristik-Daten erste Fingerabdruckinformationen und eine erste Fingerabdruckrichtung umfassen;
- Bereitstellen einer Anwendungsschnittstelle, Detektieren eines zweiten Drückvorgangs mittels eines Fingers des Benutzers auf der Benutzerschnittstelle auf dem Touchscreen, Erfassen eines zweiten Fingerabdruckbilds gemäß dem zweiten Drückvorgang und Erzeugen von entsprechenden zweiten Fingerabdruckcharakteristik-Daten gemäß dem zweiten Fingerabdruckbild, wobei die zweiten Fingerabdruckcharakteristik-Daten zweite Fingerabdruckinformationen und eine zweite Fingerabdruckrichtung umfassen;
- wenn bestimmt wird, dass die ersten Fingerabdruckinformationen mit den zweiten Fingerabdruckinformationen konsistent sind, ferner Berechnen eines Winkeldifferenzwerts zwischen der ersten Fingerabdruckrichtung und der zweiten Fingerabdruckrichtung, und wenn der Winkeldifferenzwert innerhalb eines Schwellwertbereichs liegt, Schalten zu einem zweiten Bildschirmanzeigemodus.

11. Speichermedium nach Anspruch 10, wobei der erste Bildschirmanzeigemodus ein Vertikal-Bildschirmanzeige-Modus ist und der zweite Bildschirmanzeigemodus ein Horizontal-Bildschirmanzeige-Modus ist.

12. Speichermedium nach Anspruch 10, wobei der erste Bildschirmanzeigemodus ein Horizontal-Bildschirmanzeige-Modus ist und der zweite Bildschirmanzeigemodus ein Vertikal-Bildschirmanzeige-Modus ist.

13. Speichermedium nach einem der Ansprüche 10 bis 12, wobei der Schwellwertbereich zwischen 80 Grad und 100 Grad oder zwischen -100 Grad und -80 Grad liegt.

## Revendications

1. Procédé de réglage d'écran (301, 302, 303) dans lequel un terminal de communication mobile (10) est muni d'un écran tactile (11), et le procédé comprend les étapes suivantes :
- dans un premier mode d'affichage sur écran, répondre (301) à une sélection d'un utilisateur pour fournir une interface utilisateur ayant un réglage initial, détecter (301) une première action de pression d'un doigt de l'utilisateur sur l'interface utilisateur, collecter une première image d'empreinte digitale conformément à la première action de pression, et générer des premières données de caractéristiques d'empreinte digitale correspondantes conformément à la première image d'empreinte digitale, où les premières données de caractéristiques d'empreinte digitale comprennent des premières informations d'empreinte digitale et une première direction d'empreinte digitale ;
- fournir une interface d'application, détecter (302) une seconde action de pression d'un doigt de l'utilisateur sur l'interface utilisateur, collecter une seconde image d'empreinte digitale conformément à la seconde action de pression et générer les données de caractéristiques de seconde empreinte digitale correspondantes conformément à la seconde image d'empreinte digitale, où les secondes données de caractéristiques d'empreinte digitale comprennent des secondes informations d'empreinte digitale et une seconde direction d'empreinte digitale ;
- lorsqu'il est déterminé que les premières informations d'empreinte digitale sont cohérentes avec les secondes informations d'empreinte digitale, calculer (303) une valeur de différence d'angle entre une première direction d'empreinte digitale et une seconde direction d'empreinte digitale, et
- lorsque la valeur de la différence d'angle se situe dans une plage de seuil, basculer vers un second mode d'affichage sur écran.

2. Procédé selon la revendication 1, dans lequel le premier mode d'affichage sur écran est un mode d'affichage sur écran vertical, et le second mode d'affichage sur écran est un mode d'affichage sur écran horizontal.

3. Procédé selon la revendication 1, dans lequel le premier mode d'affichage sur écran est un mode d'affichage sur écran horizontal, et le second mode d'affichage sur écran est un mode d'affichage sur écran vertical.

4. Procédé selon l'une quelconque des revendications précédentes, dans lequel la plage de seuil est comprise entre 80 et 100 degrés ou entre -100 et -80 degrés.

5. Procédé selon l'une quelconque des revendications 1 à 3, dans lequel la plage de seuil est comprise entre 85 et 95 degrés ou entre -95 et -85 degrés.

6. Terminal de communication mobile (10) comprenant : un écran tactile (11), un module de traitement (12) et un module de commutation ; le terminal de communication mobile (10) étant adapté pour exécuter chacune des étapes de procédé suivantes :
- lorsque l'écran tactile est dans un premier mode d'affichage, l'écran tactile répond à une sélection d'un utilisateur pour fournir une interface utilisateur ayant un réglage initial, et le module de traitement détecte une première action de pression d'un doigt de l'utilisateur sur l'interface utilisateur, collecte une première image d'empreinte digitale selon la première action de pression, et génère les premières données de caractéristiques d'empreinte digitale correspondantes selon la première image d'empreinte digitale, où les premières données de caractéristiques d'empreinte digitale comprennent les premières informations d'empreinte digitale et une première direction d'empreinte digitale ;
- l'écran tactile fournit une interface d'application, et le module de traitement détecte une seconde action de pression d'un doigt de l'utilisateur sur l'interface utilisateur, collecte une seconde image d'empreinte digitale selon la seconde action de pression et génère des secondes données de caractéristiques d'empreinte digitale correspondantes selon la seconde image d'empreinte digitale, où les secondes données de caractéristiques d'empreinte digitale comprennent des secondes informations d'empreinte digitale et une seconde direction d'empreinte digitale ;
- lorsqu'il est déterminé que les premières informations d'empreinte digitale sont cohérentes avec les secondes informations d'empreinte digitale par le module de traitement, le module de traitement calcule en outre une valeur de différence d'angle entre la première direction d'empreinte digitale et la seconde direction d'empreinte digitale et, lorsque la valeur de différence d'angle se situe dans une plage de seuil, le module de commutation commande l'écran tactile pour basculer dans un second mode d'affichage sur écran.

7. Terminal de communication mobile selon la revendication 6, dans lequel le premier mode d'affichage sur écran est un mode d'affichage sur écran vertical, et le second mode d'affichage sur écran est un mode d'affichage sur écran horizontal.

8. Terminal de communication mobile selon la revendication 6, dans lequel le premier mode d'affichage sur écran est un mode d'affichage sur écran horizontal, et le second mode d'affichage sur écran est un mode d'affichage sur écran vertical.

9. Terminal de communication mobile selon l'une quelconque des revendications 6 à 8, dans lequel la plage de seuil est comprise entre 80 et 100 degrés ou entre -100 et -80 degrés.

10. Support de stockage sur lequel sont stockées des instructions exécutables par un processeur où lesdites instructions sont exécutées par un processeur pour effectuer chacune des opérations suivantes :
- dans un premier mode d'affichage, fournir une interface utilisateur ayant un réglage initial conformément à une sélection d'utilisateur, détecter une première action de pression d'un doigt de l'utilisateur sur l'interface utilisateur sur un écran tactile, collecter une première image d'empreinte digitale selon la première action de pression, et générer des premières données de caractéristiques d'empreinte digitale correspondantes selon la première image d'empreinte digitale, où les premières données de caractéristiques d'empreinte digitale comprennent des premières informations d'empreinte digitale et une première direction d'empreinte digitale ;
- fournir une interface d'application, détecter une seconde action de pression d'un doigt de l'utilisateur sur l'interface utilisateur sur l'écran tactile, collecter une seconde image d'empreinte digitale selon la seconde action de pression et générer des secondes données de caractéristiques d'empreinte digitale correspondantes selon la seconde image d'empreinte digitale, où les secondes données de caractéristiques d'empreinte digitale comprennent des secondes informations d'empreinte digitale et une seconde direction d'empreinte digitale ;
- lorsqu'il est déterminé que les premières informations d'empreinte digitale sont cohérentes avec les secondes informations d'empreinte digitale, calculer en outre une valeur de différence d'angle entre la première direction d'empreinte digitale et la seconde direction d'empreinte digitale et, lorsque la valeur de différence d'angle se situe dans une plage de seuil, basculer dans un second mode d'affichage sur écran.

11. Support de stockage selon la revendication 10, dans lequel le premier mode d'affichage sur écran est un mode d'affichage sur écran vertical, et le second mode d'affichage sur écran est un mode d'affichage sur écran horizontal.

12. Support de stockage selon la revendication 10, dans lequel le premier mode d'affichage sur écran est un mode d'affichage sur écran horizontal, et le second mode d'affichage sur écran est un mode d'affichage sur écran vertical.

13. Support de stockage selon l'une quelconque des revendications 10 à 12, dans lequel la plage de seuil est comprise entre 80 et 100 degrés ou entre -100 et - 80 degrés.
